# EUROPÄISCHE PATENTSCHRIFT

(11) **EP 0 917 819 B1**
(45) Veröffentlichungstag und Bekanntmachung des Hinweises auf die Patenterteilung: **05.06.2002**
(21) Anmeldenummer: 98117305.7
(22) Anmeldetag: 12.09.1998
(51) Int. Cl.: A01F 12/40

(54) **Anbauhäcksler eines Mähdreschers**
Combine with a straw chopper
Moissonneuse-batteuse équipée d'un hache-paille

(30) Priorität: 20.11.1997 DE 19751368
(43) Veröffentlichungstag der Anmeldung: 26.05.1999
(73) Patentinhaber: CLAAS Selbstfahrende Erntemaschinen GmbH, 33428 Harsewinkel (DE)
(72) Erfinder: Claes, Ulrich, 32289 Rödinghausen (DE)

(56) Entgegenhaltungen:
- EP-A- 0 631 717
- DE-A- 2 805 208
- DE-A- 4 218 235
- GB-A- 2 165 732
- US-A- 2 554 669
- US-A- 2 626 159
- US-A- 2 708 582
- US-A- 2 842 175
- US-A- 3 403 863

## Beschreibung

Die Erfindung betrifft einen Anbauhäcksler eines Mähdreschers, der mit einem nachgeschalteten Breitverteileraustrag für das Häckselgut ausgerüstet ist, wobei der Anbauhäcksler im wesentlichen aus rotierend antreibbaren Häckselmessern und damit zusammenwirkenden, feststehenden Gegenmessern besteht.

Der infrage kommende Anbauhäcksler eines Mähdreschers ist normalerweise so ausgelegt, daß wahlweise der Anbauhäcksler in Betrieb genommen werden kann, um das Stroh zu häckseln oder daß er in einer Außerbetriebsstellung gebracht werden kann, um das Stroh in Schwaden abzulegen. Sofern das Stroh gehäckselt werden soll, ist der Breitverteileraustrag notwendig, da die Schnittbreiten von Mähdreschern bis zu 9 m betragen können. Wenn das Stroh gehäckselt wird, muß dafür Sorge getragen werden, daß das Häckselgut möglichst gleichmäßig über die gesamte Schnittbreite des Mähdreschers auf dem Acker verteilt wird.

Es ist dazu gemäß der DE 43 21 905 A1 vorgeschlagen, daß das Häckselgut in zwei Übergabetrichter läuft, um es in zwei Wurfgebläse einzuleiten. Diese Wurfgebläse sind mit Rotoren ausgerüstet, die um vertikale Achsen rotierend antreibbar sind. Diese relativ aufwendige Maßnahme ist jedoch noch nicht ausreichend, obwohl die Rotoren mit relativ großen Drehzahlen angetrieben werden. Um einen möglichst gleichmäßigen Austrag des Häckselgutes zu gewährleisten, werden die beiden Auswurfstutzen um einen einstellbaren Schwenkwinkel geschwenkt. Man kann zwar davon ausgehen, daß die Verteilung ausreichend gleichmäßig erfolgt, jedoch ist der konstruktive Aufwand äußerst hoch. Außerdem ist aufgrund der hohen Drehzahl der Rotoren für die Wurfgebläse eine entsprechend hohe Antriebsleistung notwendig.

Aus der DE 42 18 235 A1 ist ein Anbauhäcksler bekannt, der aus zwei Häckselaggregaten besteht, wobei die die Häckselmesser tragenden Wellen in Fahrtrichtung des Mähdreschers anordnet sind, so daß das Häckselgut seitlich, d. h. winklig zur Fahrtrichtung ausgeworfen wird. Bei einer anderen Ausführung steht die die Häckselmesser tragende Welle senkrecht zur Längsachse bzw. Fahrtrichtung des Mähdreschers, wobei jedoch der Drehsinn so gewählt ist, daß das ausgeschiedene Häckselgut im wesentlichen zwischen den Hinterrädern und dem rückwärtigen Ende des Mähdreschers abgelegt wird. Bei einer abgewandelten Ausführung gelangt das Häckselgut auf zwei Wurfteller, wodurch es ebenfalls nur wieder seitlich ausgetragen wird.

Auch bei diesen Ausführungen ist eine gleichmäßige Verteilung des Häckselgutes bei Mähdreschern mit den extrem großen Schnittbreiten nicht möglich.

Ausgehend von einem durch die DE 43 21 905 A1 bekannten Stand der Technik liegt die Erfindung die Aufgabe zugrunde, einen Anbauhäcksler der eingangs näher beschriebenen Art so auszubilden, daß zur Verringerung des konstruktiven Aufwandes auf Wurfgebläse oder ähnliche Verteileinrichtungen verzichtet werden kann, wobei sichergestellt werden muß, daß auch bei der größten Schnittbreite eines Mähdreschers die Verteilung des Häckselgutes gleichmäßig erfolgt.

Die gestellte Aufgabe wird gelöst, indem zur Bildung des Breitverteileraustrages die Häckselmesser und die feststehenden Gegenmesser des Anbauhäckslers aus mindestens zwei Häckseleinheiten gebildet sind, daß die die Häckselmesser und die Gegenmesser tragenden Wellen einen stumpfen Winkel einschließen, so daß mindestens zwei Häckselgutströme jeweils im wesentlichen gleichmäßig über die Schnittbreite des Mähdreschers verteilbar sind.

Durch die erfindungsgemäße Lösung kann auf Verteileinrichtungen mit angetriebenen Rotoren verzichtet werden da die beiden Häckselgutströme so eingestellt werden können, daß das Häckselgut nicht nur in den direkten Bereich hinter dem Mähdrescher sondern auch in die beiden seitlich daneben liegenden Bereiche bis hin zur vollen Schnittbreite verteilt wird. Im Gegensatz zum vorbekannten Stand der Technik werden die beiden Häckselgutströme nicht durch zusätzliche Aggregate für den Breitverteileraustrag erreicht, sondern durch die entsprechend gestalteten Anbauhäcksler. Dabei wird der konstruktive Aufwand gegenüber den einfachen Anbauhäckslern ohne Breitverteileraustrag nur unwesentlich erhöht, da nur dafür Sorge zu tragen ist, daß die beiden unter einem stumpfen Winkel stehenden, rotierend antreibbaren Wellen für die Häckselmesser synchron angetrieben werden. Dies ist mit entsprechenden Antriebselementen zu lösen.

Der von den beiden die Häckselmesser tragenden Wellen eingeschlossene Winkel liegt bei zwei Häckseleinheiten unter 180°. Dieser Winkel ist der Winkel, der an der der Kornabscheideeinrichtung zugewandten Seite liegt, d.h. in Durchflußrichtung des zu häckselnden Gutes gesehen, vor den beiden Häckseleinrichtungen liegenden Winkel. Da Mähdrescher mit unterschiedlichen Schnittbreiten geliefert werden, ist vorgesehen, daß dieser von den Häckseleinheiten eingeschlossene Winkel einstellbar ist. Damit sichergestellt ist, daß das gesamte Stroh auch in die Häckseleinheiten gelangt, ist vorgesehen, daß jede Häckseleinheit mit einem Einlauftrichter ausgerüstet ist. Zur gleichmäßigen Verteilung ist vorgesehen, daß jede Häckseleinheit mit einem Auswurfstutzen ausgerüstet ist. Dieser Auswurfstutzen erweitert sich querschnittsmäßig zum rückwärtigen Ende. Auch diese Auswurfstutzen stehen im Winkel zueinander. Durch die querschnittsmäßige Erweiterung zum rückwärtigen Bereich hin ist sichergestellt, daß das austretende Häckselgut auch im mittleren Bereich der Schnittbreite eines Mähdreschers verteilt wird. Der Antrieb der beiden Wellen für die Häckselmesser kann vielfältig erfolgen, so ist vorgesehen, daß jede Häckseleinheit durch einen eigenen Antrieb antreibbar ist, oder daß nur eine Häckseleinheit vom Hauptantrieb des Mähdreschers angetrieben wird, und die andere damit antriebstechnisch gekoppelt ist. Zur Führung des Häckselgutstromes innerhalb der Auswurfstutzen ist vorgesehen, daß darin Leitbleche angeordnet sind.

Anhand der beiliegenden Zeichnungen wird die Erfindung noch näher erläutert. Es zeigen
- Figur 1: Der rückwärtige Bereich eines mit einem Schüttler und einem erfindungsgemäßen Anbauhäcksler ausgerüsteten Mähdrescher in einer Seitenansicht,
- Figur 2: der rückwärtige Bereich eines mit einem Schüttler und einem erfindungsgemäßen Anbauhäcksler ausgerüsteten Mähdrescher in einer Draufsicht,
- Figur 3: der rückwärtige Bereich eines mit einem oder zwei Trennrotoren und einem er findungsgemäßen Anbauhäcksler ausgerüsteten Mähdrescher in einer Seitenansicht und
- Figur 4: der rückwärtige Bereich eines mit zwei Trennrotoren und einem erfindungsgemäßen Anbauhäcksler ausgerüsteten Mähdrescher entsprechend der Figur 3 in einer Draufsicht.

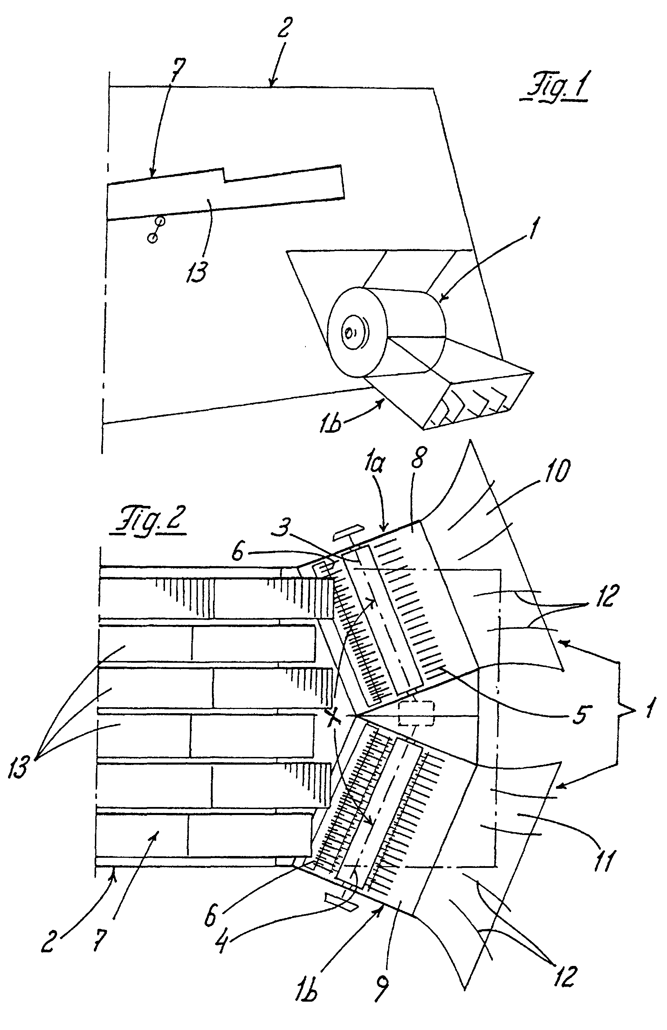

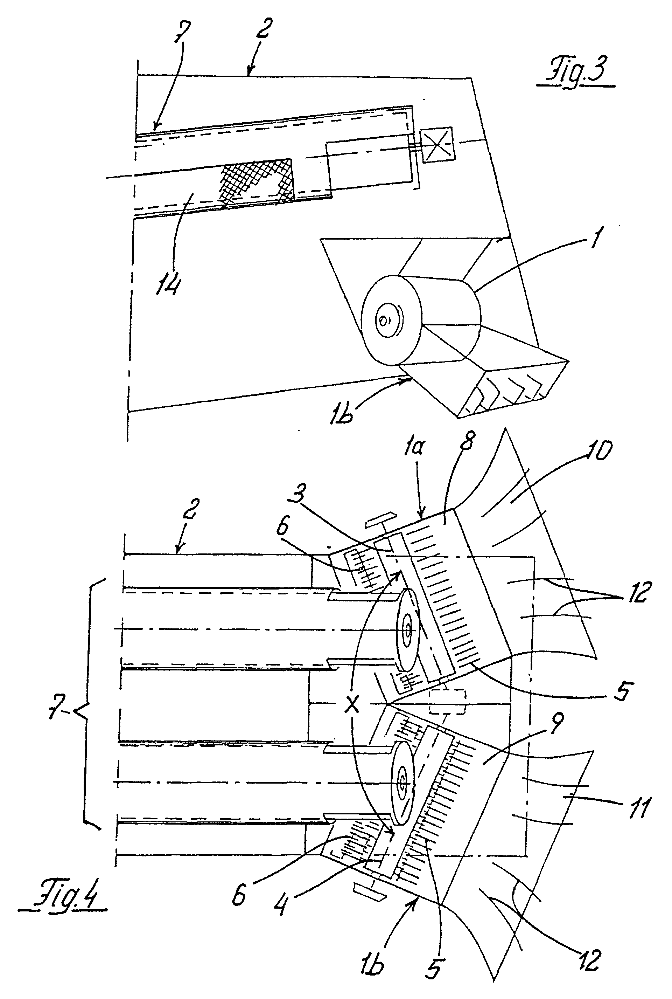

Die in den Figuren 1 bis 4 rein schematisch dargestellten Anbauhäcksler 1 eines andeutungsweise dargestellten Mähdreschers 2 bestehen zur Bildung eines Breitverteileraustrages aus den beiden Häckseleinheiten 1a und 1b, die als baugleich anzusehen sind. Jede Häckseleinheit 1a, 1b ist mit einer rotierend antreibbaren Welle 3, 4 ausgestattet, auf die die Häckselmesser 5 drehfest oder drehbar aufgesetzt sind. Diese Häckselmesser 5 arbeiten mit andeutungsweise dargestellten, ortsfesten Gegenmessern 6 zusammen, um das Stroh ausreichend zu zuerkleinern. Die Häckselmesser 5 und die Gegenmesser 6 stehen dazu in einem relativ geringen und gleichen Abstand zueinander, jedoch um den halben Abstand versetzt. Wie insbesondere die Figuren 2 und 4 zeigen, stehen die beiden Wellen 3, 4 unter einem stumpfen Winkel zueinander, der kleiner ist als 180° und im dargestellten Ausführungsbeispiel ca. 135 ° beträgt. Dieser Winkel ist der Winkel, der in Flußrichtung des Strohes vor den beiden Wellen 3, 4 liegt, d.h. der Kornabscheideeinrichtung 7 zugewandt. In nicht näher dargestellter Weise kann dieser Winkel je nach Schnittbreite des Mähdreschers einstellbar sein, wenn der Antrieb oder die Antriebe für die beiden Wellen 3, 4 entsprechend gestaltet sind. Damit das Häckselgut vollständig von den beiden Häckseleinheiten 1a, 1b zerkleinert wird, ist zwischen dem Abgabeende der Kornabscheideeinrichtung 7 und den beiden Häckseleinheiten 1a, 1b jeweils ein Einlauftrichter 8, 9 vorgesehen. Jede Häckseleinheit 1a, 1b ist mit einem Auswurfstutzen 10, 11 ausgerüstet, die sich zum rückwärtigen, freien Ende hin querschnittsmäßig vergrößern, so daß der austretende Häckselgutstrom gleichmäßig jeweils über die halbe Schnittbreite des Mähdreschers verteilt wird. Dazu sind außerdem innerhalb der beiden Auswurfstutzen 10, 11 noch entsprechend gekrümmte Leitbleche 12 montiert.

Der Antrieb der Wellen 3, 4 kann in verschiedenster Weise erfolgen, so ist es möglich, daß jede Welle 3, 4 durch einen eigenen Antrieb vom Hauptantrieb des Mähdreschers angetrieben wird, wie in den Figuren 2 und 4 dargestellt. Dazu sind auch die beiden äußeren, einander abgewandt liegenden Enden der Wellen 3, 4 Tellerräder drehfest aufgekeilt, die in nicht näher dargestellter Weise angetrieben werden. Die beiden inneren Endbereiche sind dann entsprechend gelagert. Im Gegensatz zu der dargestellten Ausführung könnten auch die beiden inneren Endbereiche der Wellen 3, 4 antriebstechnisch miteinander gekoppelt sein, beispielsweise durch entsprechende Tellerräder. Es könnte dann entweder die Welle 3 oder 4 angetrieben werden.

Die Anbauhäcksler der beiden Ausführungen unterscheiden sich von der Funktion her nicht. Allenfalls ist eine Anpassung an die verschiedenen Kornabscheideeinrichtungen 7 erforderlich. Bei der Ausführungen nach den Figuren 1 und 2 besteht die Kornabscheideeinrichtung aus Schüttlern 13, der im Mähdrescherbau bekannt ist. Bei der Ausführung nach den Figuren 3 und 4 besteht die Kornabscheideeinrichtung 7 aus zwei gegenläufig rotierend antreibbaren Trennrotoren 14, 15 deren Drehachsen in Flußrichtung des Erntegutes bzw. in Fahrtrichtung verlaufen. In nicht dargestellter Weise können die Trennrotoren 14, 15 auch quer zur Fahrtrichtung des Mähdreschers stehen bzw. parallel und im Abstand zur Vorderachse.

Die Erfindung ist nicht auf die dargestellten Ausführungsbeispiele beschränkt. Wesentlich ist, daß der Breitverteileraustrag durch den Anbauhäcksler 1 selbst erfolgt, indem er aus den beiden Häckseleinheiten 1a, 1b besteht.

### Bezugszeichenliste

- 1: - Anbauhäcksler
- 1a: - Häckseleinheit
- 1b: - Häckseleinheit
- 2: - Mähdrescher
- 3: - Welle
- 4: - Welle
- 5: - Häckselmesser
- 6: - Gegenmesser
- 7: - Kornabscheideeinrichtung
- 8: - Einlauftrichter
- 9: - Einlauftrichter
- 10: - Auswurfstutzen
- 11: - Auswurfstutzen
- 12: - Leitblech
- 13: - Schüttler
- 14: - Trennrotor
- 15: - Trennrotor

## Patentansprüche

1. Anbauhäcksler (1) eines Mähdreschers (2) der der Kornabscheideeinrichtung nachgeschaltet ist, der mit einem Breitverteileraustrag für das Häckselgut ausgerüstet ist, wobei der Anbauhäcksler (1) im wesentlichen aus rotierend antreibbaren Häckselmessern (5) und damit zusammenwirkenden und damit feststehenden Gegenmessern (6) besteht,
**dadurch gekennzeichnet,**
**daß** zur Bildung des Breitverteileraustrages die Häckselmesser (5) und die feststehenden Gegenmesser (6) des Anbauhäckslers (1) aus mindestens zwei Häckseleinheiten (1a, 1b) gebildet sind, daß die die Häckselmesser (5) und die Gegenmesser (6) tragenden Wellen (3, 4) einen stumpfen Winkel einschließen, so daß mindestens zwei Häckselgutströme im wesentlichen gleichmäßig über die Schnittbreite des Mähdreschers (2) verteilbar sind.

2. Anbauhäcksler nach Anspruch 1,
**dadurch gekennzeichnet,**
**daß** der stumpfe Winkel (x) zwischen zwei Häckseleinheiten kleiner als 180° ist.

3. Anbauhäcksler nach Anspruch 1,
**dadurch gekennzeichnet,**
**daß** der von den Häckseleinheiten (1a, 1b) eingeschlossene Winkel einstellbar ist.

4. Anbauhäcksler nach Anspruch 1,
**dadurch gekennzeichnet,**
**daß** jede Häckseleinheit (1a, 1b) mit einem Einlauftrichter (8, 9) ausgerüstet ist.

5. Anbauhäcksler nach Anspruch 1,
**dadurch gekennzeichnet,**
**daß** jede Häckseleinheit (1a, 1b) mit einem Auswurfstutzen (10, 11) ausgerüstet ist, der sich zum rückwärtigen Ende querschnittsmäßig vergrößert.

6. Anbauhäcksler nach einem oder mehreren der vorhergehenden Ansprüche 1 bis 5,
**dadurch gekennzeichnet,**
**daß** jede Häckseleinheit (1a, 1b) durch einen eigenen Antrieb antreibbar ist, oder daß die beiden Häckseleinheiten (1a, 1b) antriebstechnisch miteinander gekoppelt sind und einer der beiden Häckseleinheiten (1a oder 1b) vom Hauptantrieb des Mähdreschers (2) antreibbar ist.

7. Anbauhäcksler nach einem oder mehreren der vorhergehenden Ansprüche 1 bis 5,
**dadurch gekennzeichnet,**
**daß** innerhalb jedes Auswurfstutzens (10 bzw. 11) Leitbleche (12) für das Häckselgut angeordnet sind.

## Claims

1. A chaff cutting attachment (1) of a combine harvester (2) which is connected after the grain separation device and which is equipped with a widthwise distributor discharge for the chaff material, wherein the chaff cutting attachment (1) substantially comprises rotatingly drivable chaff cutting blades (5) and counterpart blades (6) which co-operate therewith and which are thus fixed, **characterised in that** to form the widthwise distributor discharge the chaff cutting blades (5) and the fixed counterpart blades (6) of the chaff cutting attachment (1) are formed from at least two chaff cutting units (1a, 1b), and that the shafts (3, 4) carrying the chaff cutting blades (5) and the counterpart blades (6) include an obtuse angle so that at least two flows of cut chaff material can be distributed substantially uniformly over the cutting width of the combine harvester (2).

2. A chaff cutting attachment according to claim 1 **characterised in that** the obtuse angle (x) between two chaff cutting units is less than 180°.

3. A chaff cutting attachment according to claim 1 **characterised in that** the angle included by the chaff cutting units (1a, 1b) is adjustable.

4. A chaff cutting attachment according to claim 1 **characterised in that** each chaff cutting unit (1a, 1b) is provided with an intake hopper (8, 9).

5. A chaff cutting attachment according to claim 1 **characterised in that** each chaff cutting unit (1a, 1b) is provided with an ejection portion (10, 11) which increases in cross-section towards the rearward end.

6. A chaff cutting attachment according to one or more of preceding claims 1 to 5 **characterised in that** each chaff cutting unit (1a, 1b) is drivable by its own drive or that the two chaff cutting units (1a, 1b) are drivingly coupled together and one of the two chaff cutting units (1a or 1b) is drivable by the main drive of the combine harvester (2).

7. A chaff cutting attachment according to one or more of preceding claims 1 to 5 **characterised in that** guide plates (12) for the chaff material are arranged within each ejection portion (10 and 11 respectively).

## Revendications

1. Broyeur porté (1) pour moissonneuse-batteuse (2), qui est disposé en aval du dispositif de séparation du grain et est équipé d'un dispositif éparpilleur large pour le produit broyé, le broyeur porté (1) comprenant essentiellement des couteaux de hachage (5) entraînés en rotation et des contre-couteaux (6) stationnaires, **caractérisé en ce que** pour former le dispositif éparpilleur large les couteaux de hachage (5) et les contre-couteaux (6) stationnaires du broyeur porté (1) sont agencés en au moins deux unités de hachage (1a, 1b), **en ce que** les couteaux de hachage (5) et les arbres (3,4) portant les contre-couteaux (6) forment un angle obtus, de telle sorte qu'au moins deux flux de produit broyé sont éparpillés de manière essentiellement régulière sur la largeur de coupe de la moissonneuse-batteuse (2).

2. Broyeur porté selon la revendication 1, **caractérisé en ce que** l'angle obtus (x) entre les deux unités de hachage est inférieur à 180°.

3. Broyeur porté selon la revendication 1, **caractérisé en ce que** l'angle formé par les deux unités de hachage (1a, 1b) est réglable.

4. Broyeur porté selon la revendication 1, **caractérisé en ce que** chaque unité de hachage (1a, 1b) est pourvue d'une trémie d'entrée (8, 9).

5. Broyeur porté selon la revendication 1, **caractérisé en ce que** chaque unité de hachage (1a, 1b) est pourvue d'un conduit d'éjection (10, 11), dont la section transversale augmente en direction de l'extrémité arrière.

6. Broyeur porté selon une ou plusieurs des revendications 1 à 5, **caractérisé en ce que** chaque unité de hachage (1a, 1b) est entraînée par un dispositif d'entraînement propre ou **en ce que** les deux unités de hachage (1a, 1b) sont couplées l'une à l'autre sur le plan de l'entraînement et l'une des deux unités de hachage (1a ou 1b) est entraînée par l'entraînement principal de la moissonneuse-batteuse (2).

7. Broyeur porté selon une ou plusieurs des revendications 1 à 5, **caractérisé en ce qu'**à l'intérieur de chaque conduit d'éjection (10 ou 11) sont disposées des tôles déflectrices pour le produit broyé.
